Europäisches Patentamt

European Patent Office

Office européen des brevets

(11) Publication number: **0 319 298**
A2

# (12) EUROPEAN PATENT APPLICATION

(21) Application number: **88311393.8**

(22) Date of filing: **01.12.88**

(51) Int. Cl.⁴: **C 03 B 23/023**
C 03 B 23/03, D 03 D 15/00,
D 03 D 15/12

(30) Priority: **04.12.87 US 128791**

(43) Date of publication of application:
**07.06.89 Bulletin 89/23**

(84) Designated Contracting States: **DE FR GB IT SE**

(71) Applicant: **MINNESOTA MINING AND MANUFACTURING COMPANY**
**3M Center, P.O. Box 33427**
**St. Paul, Minnesota 55133-3427 (US)**

(72) Inventor: **Fischer, Edward M. c/o Minnesota Mining and Manufacturing Company 2501 Hudson Road**
**St. Paul Minnesota 55144-1000 (US)**

(74) Representative: **Baillie, Iain Cameron et al**
**c/o Ladas & Parry Isartorplatz 5**
**D-8000 München 2 (DE)**

(54) Glass shaping fabric liner.

(57) Shaping glass sheets into complicated shapes having convex and concave curvature portions requires a continuous shaping surface onto which a supported glass sheet is heated and conformed. Glass shaping molds are usually made of materials that can be harmful to the glass or the shaping face of the molds can be harmed when there is direct contact between the hot glass and the mold. The present invention provides a composite fabric liner comprised of high temperature resistant ceramic fibers and glass fibers useful as a shaping liner between the glass sheet and the mold surface.

EP 0 319 298 A2

# Description

## GLASS SHAPING FABRIC LINER

### FIELD OF THE INVENTION

This invention relates to shaping glass sheets and, in particular, relates to a composite fabric liner comprised of high temperature resistant ceramic fibers and texturized fiberglass for use in glass shaping operations. The liner is utilized between the glass sheet being shaped and the mold surface thereby reducing surface damage to the glass or the mold at the interface.

### BACKGROUND OF THE INVENTION

The art of shaping glass sheets by press bending is well established. Press bending involves heating a succession of glass sheets to an elevated temperature, sufficient for deformation, in an enclosed furnace and then removing the hot sheet from the furnace. The heated sheet is then sandwiched between a pair of shaping molds having shaping faces of complementary curvature which form the curved shape desired for the glass. The press bent glass sheet is then chilled below its deformation temperature to temper the sheet.

Press bending molds are usually made of materials which can be harmful to the glass or the shaping surface of the mold itself can be harmed from direct contact between the hot glass and the mating surfaces of the mold during press bending. Consequently, the glass bending art has developed fiberglass liners for such molds. Liners of knit fiberglass cloth comprised of texturized yarns are described in U.S. Patent No. 3,148,968; knit liners are preferred over woven cloth liners for their ability to produce bent glass sheets having better optical properties.

Such liners deteriorate rapidly and therefore have to be replaced quite frequently. The delay in operations caused by the necessity for liner replacement has resulted in the development of several methods for mounting a liner material between a supply reel and a receiving reel and periodically moving the liner by winding the receiving reel, thus obviating the need for individually replacing the liner material.

U.S. Patent No. 3,329,494 discloses a winding and reeling device for renewing a liner for a shaping mold having a convex shaping face. A pair of idler rolls cooperates with the convex shaping face to maintain the liner material in an unwrinkled condition. However, wrinkling can still occur when the liner is disposed over a concave shaping face leading to an imperfect surface.

U.S. Patent No. 3,523,783 provides another means for supporting fiberglass liner material in an unwrinkled condition across the shaping face of a press bending mold. The invention is applicable to molds of convex or concave configurations.

### SUMMARY OF THE INVENTION

The present invention provides a glass shaping mold liner with improved heat resistance, thus obviating frequent liner renewal. Bending glass sheets requires that the glass sheets be heat softened and shaped by pressurized contact against a shaping member. The glass shaping mold liner is inserted between the glass sheet being shaped and the shaping member. The glass shaping liner must withstand high temperatures while imparting a specific surface structure (smoothness, etc.) to the glass. The glass shaping liner of the present invention comprises a unique hybrid fabric of ceramic and glass fibers which withstands repeated use and also imparts the required surface structure to the glass sheets.

### DETAILED DESCRIPTION OF THE INVENTION

The glass shaping liner of the present invention comprises a fabric which contains a blend of ceramic fibers and texturized fiberglass.

Yarns of ceramic fiber and texturized fiberglass are separately placed on independent warp feed systems to individually control the tension of the yarns entering the loom. In one embodiment of the present invention, the ceramic fiber yarn is a polycrystalline continuous ceramic fiber, 900 denier base, 1/2 ply twisted yarn. The ceramic fiber yarn comprises 62% by weight aluminum oxide, 14% by weight boron oxide and 24% by weight silicon dioxide (commercially available as Nextel 312 ceramic fiber from 3M Company). The fiberglass yarns are a continuous multi-strand, 3852 denier, glass fiber which is texturized to increase the bulk and thickness (commercially available as ET6 428 TEX from P.P.G. Industries, Inc.). Fill yarns are inserted using a color selector fill system to deliver the type of yarn required by the weave pattern. An 8 harness weave pattern is modified such that every fourth strand in the warp and fill systems is a ceramic fiber with the other strands being texturized glass fibers. The warp feed system is prepared such that there are 29 strands per inch (2.54 cm) and the fill system is prepared to have 22 strands per inch (2.54 cm). By individually controlling the tension in the two warp feed system and because of the unbalanced yarn count between the warp and fill systems, it is possible to produce a fabric according to the present invention wherein the larger texturized glass fibers loft to a higher surface position at a weave intersection with a ceramic fiber. Tension of the fibers is adjusted until a lofting of the texturized glass fibers at the weave intersections produces a spacing distance with the ceramic fiber spaced apart at a greater distance than the diameter of the ceramic fiber.

A fabric produced following the above procedure resulted in a glass shaping liner about 0.25 inches (.625 mm) thick with an air permeability of 39 ft$^3$ -ft$^2$/min. (12 m$^3$ - m$^2$/min). In a test molding operation, the lofted surface of the glass shaping liner was placed in contact with the hot sheet of glass with the opposite surface in contact with the mold. Four hundred forty-one 23 inch (58 cm) diagonally measured computer display face plates were produced during a 7.5 hour continuous molding operation before a small 1 inch (2.5 cm) tear occurred on the edge of the liner fabric. The mold temperature was held at approximately 680 C.

A further advantage of using the liner of the present invention is that there are virtually no rejects of molded face plates during the start-up period of the molding operation. This is in sharp contrast to the method using leached glass fabric liners wherein ten to twenty parts are often rejected during start-up.

In shaping automobile glass windows, prior art knit texturized fiberglass liners have short lifetimes (about 1 to 2 hours) and leached glass liners leave objectionable surface marks. The glass shaping liner of the present invention described above was used on a closed furnace press shaping mold at a furnace temperature of about 640 C to produce a run of 40 satisfactory windows without any scuff or tear damage to the liner fabric.

Additional testing revealed that greater than 50 volume percent ceramic fiber content in the liner fabric caused glass surface marking. It was also found that by using smaller denier ceramic fiber in the one-every-fourth-strand construction, the volume percent ceramic fiber content of the fabric can be as low as 10 percent.

The present invention has been described for the purpose of illustration rather than limitation. Likewise, ceramic fibers other than the specific alumina/boria/silica fiber could be used to provide a ceramic fiber. The present invention provides a composite high temperature refractory fabric that can be employed to provide a durable, long-lasting glass shaping liner fabric utilizable in producing acceptable molded glass products heretofore not available in the art of bending heat-softened glass sheets.

## Claims

1. A fabric liner for a glass shaping mold, said liner comprising from 10 to 50 volume percent high temperature resistant ceramic fibers and from 50 to 90 volume percent texturized glass fibers.

2. The fabric liner according to claim 1 wherein the ceramic fibers comprise 62 weight percent aluminum oxide, 14 weight percent boron oxide and 24 weight percent silicon dioxide.

3. The fabric liner according to claim 1 wherein the fabric liner is woven.

4. The fabric liner according to claim 3 wherein the glass fibers are lofted at weave intersections with ceramic fibers.

5. The fabric liner according to claim 3 wherein the air permeability of said fabric is at least $0 \, m^3 - m^2/min$.